# EUROPÄISCHE PATENTANMELDUNG

(11) **EP 2 249 491 A1**
(43) Veröffentlichungstag der Anmeldung: **10.11.2010**
(21) Anmeldenummer: 10158959.6
(22) Anmeldetag: 01.04.2010
(51) Int. Cl.: H04B 10/00, G02B 6/43

(54) **Verfahren und Schaltung mit optischer Datenübertragung**

(30) Priorität: 07.05.2009 DE 102009002905
(71) Anmelder: Robert Bosch GmbH, 70469 Stuttgart (DE)
(72) Erfinder: Barth, Heinrich, 71229 Leonberg (DE); Schertlen, Ralph, 70191 Stuttgart (DE)

(57) **Zusammenfassung**

Die Erfindung betrifft eine Schaltung mit einer Verbindungsstruktur und mindestens zwei elektronischen Bauelementen. Die mindestens zwei elektronischen Bauelemente weisen jeweils mindestens eine optische Datenschnittstelle auf. Die Verbindungsstruktur ist von einer Masse vorgesehen, die lichtdurchlässig ist. Die optischen Datenschnittstellen sowie die elektronischen Bauelemente sind in der Masse eingelassen bzw. sind optisch verbunden, und die optischen Datenschnittstellen sind zur Masse derart ausgerichtet, dass optische Signale, die durch die Masse übertragen werden, zu- und ausgehend von den optischen Datenschnittstellen übertragen werden. Die Erfindung betrifft ferner ein zugehöriges Herstellungsverfahren, bei dem die Masse eingegossen oder eingespritzt wird, um die Verbindungsstruktur vorzusehen, oder bei dem die Masse als feste Struktur vorgefertigt wird, um diese zwischen die Bauteile einzulegen. Schließlich betrifft die Erfindung ein Verfahren zur Übertragung von optischen Signalen, wobei die optische Masse, welche die optischen Schnittstellen der Bauelemente verbindet, Übertragungskanäle für die Signale vorsieht.

## Beschreibung

### Stand der Technik

Die Erfindung geht aus von Schaltungen mit mehreren elektronischen Bauelementen, die miteinander zur Signalübertragung verbunden sind. Die Verbindung von elektronischen Bauelementen über elektrische Verbindungen wie Leiterbahnen oder Kabelverbindungen ist weitreichend bekannt. Für spezifische Anwendungen ist ferner bekannt, optische Übertragungseinrichtungen zu verwenden, bei denen ein Lichtsender über ein lichtführendes Medium mit einem Lichtempfänger verbunden ist. Ferner ist bekannt, das vom Sender abgehende Licht zu fokussieren, üblicherweise durch die fokussierende Wirkung einer Leuchtdiodenspitze oder anderer optischer Linsen, um Daten gerichtet zu übertragen.

Derartige Übertragungstechniken sind beispielsweise aus der DE 10 2005 048 197 A1 bekannt, wobei dort ein Digitalmodul und ein Rechnermodul beschrieben sind, die über eine optische Übertragungsstrecke verbunden sind. In dieser Druckschrift wird als Übertragungsmedium ein Lichtleiter oder eine Freiraumstrecke vorgeschlagen.

Bei der Verwendung eines Lichtwellenleiters müssen aufwändige und störanfällige Lichtleiterverbindungen hergestellt werden, die zum einen präzise Verarbeitungsschritte bei der Herstellung erfordern, durch die Verbindungskomponenten wie Stecker und Buchsen zusätzliche Materialkosten erzeugen, und auf Grund der Vielzahl von zusätzlichen Komponenten insbesondere bei Erschütterungen störanfällig sind. Ähnliche Nachteile weisen optische Freiraumstrecken auf, die eine präzise Ausrichtung der Bauteile erfordern und insbesondere bei kritischen Umgebungen, wie einem Motorraum eines Kraftfahrzeugs, leicht durch Staub gestört werden können.

Darüber hinaus wird bei der in DE 10 2005 048 197 A1 dargestellten Steuergeräteanordnung die Wärmeentwicklung von elektronischen Bauelementen außer Acht gelassen, die sich durch die Datenverarbeitung ergibt. Abhängig von der Anwendung können Berechnungseinheiten, beispielsweise CPUs oder andere logische Einheiten, eine beträchtliche Wärmemenge erzeugen. Gleichzeitig dürfen diese Berechnungseinheiten eine maximale Temperatur nicht übersteigen, da ansonsten diese Einheiten auf Grund der Wärmebelastung ausfallen können. Es ist bekannt, zur Wärmeableitung zusätzliche Kühlkörper einzusetzen, die mittels eigens dafür vorgesehenen Befestigungseinrichtungen an den elektronischen Bauelementen befestigt werden. Die Befestigung dieser Kühlkörper bringt bei der Herstellung zusätzliche Verfahrensschritte mit sich. Durch die notwendige hohe Masse des Kühlelements und das üblicherweise separat vorgesehene Befestigungselement ergibt sich eine weitere wesentliche Fehlerquelle, insbesondere bei Anwendungen, bei denen die Schaltungsvorrichtung Vibrationen ausgesetzt ist, beispielsweise innerhalb eines Motorraums eines KFZ. Neben der fehlenden Kühlung bei einem durch Vibrationen abgelösten Kühlkörper ist vor allem der nun lose innerhalb des Schaltungsgehäuses liegende Kühlkörper ein wesentlicher Störfaktor, der vor allem Kurzschlüsse erzeugen kann. Die Befestigung eines Kühlkörpers mittels üblicher mechanischer Mittel ist daher insbesondere bei vibrationsbelasteten Anwendungen störungsanfällig und stellt bei der Herstellung einen zusätzlichen Aufwand- und Kostenfaktor dar.

Es ist daher eine Aufgabe der Erfindung, eine Schaltungsanordnung vorzusehen, mit der sich mindestens einer der oben genannten Nachteile verhindern oder ausschalten lässt.

### Offenbarung der Erfindung

Erfindungsgemäß wird eine stark vereinfachte Struktur zur Datenübertragung dadurch vorgesehen, dass Bauelemente einer Schaltung über eine Masse verbunden sind, die optisch transparent ist. Die optisch transparente Masse verbindet alle, einige oder einzelne Bauelemente einer Schaltung durch ein einzelnes, einfach vorzusehendes Verbindungsmittel. Dieses Verbindungsmittel wird durch eine Masse vorgesehen, die über einige Zentimeter oder Dezimeter optische Daten überträgt mit einem Dämpfungsfaktor, der über diese Länge noch ein ausreichendes Lichtsignal am Empfangsort ermöglicht. Die Masse wird vorzugsweise als eine optische Struktur vorgefertigt, die zwischen Bauelemente durch Einfügen eingebracht wird. Die optische Struktur sieht Oberflächen der Masse selbst vor, die zur optischen Verbindung mit den Bauelementen verwendet wird und nach dem Einfügen unmittelbar an diese angrenzt. Die optische Struktur ist insbesondere ohne Stecker, Buchsen oder andere zusätzliche Kontaktmittel ausgeführt, sondern ist mit den Oberflächen einteilig ausgebildet, die ohne weitere Mittel den optischen Kontakt mit den Bauelementen und deren optischen Schnittstellen herstellen.

Die Masse bzw. die von dieser vorgesehene Struktur kann alle oder vorzugsweise nur einige aller Bauelemente der Schaltung miteinander verbinden. Die Struktur kann eine gezielte Lichtleitstruktur aufweisen, in dem diese einzelne, körperlich voneinander zumindest teilweise getrennte Kanäle aus durchgängiger Masse vorsieht. Durch die körperliche Trennung ergeben sich unterschiedliche physikalische Kanäle aufgrund des geringeren Brechungsindex außerhalb der Masse, so dass die Kanäle lichtleitend wirken und gegebenenfalls gleichzeitig Wärme transportieren. Die Kanäle enden an optischen Datenschnittstellen der verbundenen Bauteile, wobei die Kanalenden durch Oberflächen der Masse bzw. der Struktur vorgesehen sind, die unmittelbar und vorzugsweise ohne weitere Befestigungselemente körperlich an die Datenschnittstellen angrenzen. Die Struktur kann dadurch gezielt Bauelemente einer oder mehrerer Bauelementuntergruppen körperlich miteinander verbinden, so dass diese lichtübertragend und wärmeübertragend miteinander verbunden sind. Zur Wärmeübertragung kann die Struktur ferner eine Verbindung mit einem Kühlkörper oder einem Gehäuseabschnitt durch unmittelbaren körperlichen Kontakt vorsehen, wobei diese Verbindung die optische Verbindung nicht beeinträchtigt. Weite Teile der Wärmeübertragung unter der optischen Übertragung können daher mit ein und dem selben körperlichen Kontakt und Strukturabschnitt vorgesehen werden.

Weitere Ausführungsformen sehen vor, dass die Masse beispielsweise gegossen oder gespritzt werden kann, nachdem die Bauelemente montiert sind. Mit einem einzigen Herstellungsschritt, nämlich dem Einfügen der Struktur oder dem Vergießen, werden sämtliche optischen Verbindungen dauerhaft und vibrationsfest hergestellt.

Die erfindungsgemäße Schaltung weist somit mindestens zwei elektronische Bauelemente auf, wobei diese mindestens zwei elektronischen Bauelemente jeweils mindestens eine optische Datenschnittstelle aufweisen. Die Schaltung umfasst erfindungsgemäß ferner eine Masse, die optisch transparent ist, und in die die optischen Datenschnittstellen eingelassen sind. Neben den optischen Datenschnittstellen sind ferner die elektronischen Bauelemente (zumindest teilweise) eingelassen. Die optischen Datenschnittstellen der Bauelemente sind zur Masse derart ausgerichtet bzw. in der Masse derart eingelassen, dass optische Signale, die durch die Masse hindurch übertragen werden, zu den optischen Schnittstellen übertragen werden. Da die Masse mit Ihren Oberflächen unmittelbar an die optischen Datenschnittstellen angrenzt, ergibt sich auch eine direkte optische Verbindung. Zudem sind die Datenschnittstellen derart zur Masse und deren Oberflächen ausgerichtet bzw. in diese eingelassen, dass optische Signale, die von den Datenschnittstellen ausgehen, unmittelbar in die Masse übertragen werden.

Neben der optischen Verbindung zwischen den Datenschnittstellen sieht die Masse selbst einen mechanischen Schutz vor und verbindet ferner die elektronischen Bauelemente mechanisch untereinander. Die körperliche Verbindung, die die Masse und ihre Oberflächen vorsieht, dient gemäß einem weiteren Aspekt der Erfindung der Wärmeabfuhr und der Wärmeleitung. Hierbei wird die Masse zumindest minimal wärmeleitfähig vorgesehen, wobei die Schaltung ferner Kühlflächen umfasst, die von einem äußeren Kühlflächenbereich eines Kühlelements oder eines Gehäuses vorgesehen werden, das in körperlichem Kontakt mit einem ersten Oberflächenbereich der Masse ist. Die elektronischen Bauelemente sind insbesondere Leistungsbauelemente, die Wärme erzeugen, oder auch andere wärmeerzeugende Bauelemente. Insbesondere CPUs und Microcontroller werden somit als wärmeerzeugende Bauelemente bezeichnet, da diese eine wesentliche Wärmemenge erzeugen. Darüber hinaus werden als wärmeerzeugende Bauelemente Leistungsbauelemente wie Starkstrom- oder Endstufenhalbleiter angesehen, oder auch Gleichrichterschaltungen, die auf Grund eines hohen Stromdurchsatzes Wärme erzeugen.

Somit verbindet die Masse durch ihre Wärmeleitungseigenschaften die elektronischen Bauelemente mit Kühlflächen, die an einem Gehäuse oder an einem Kühlkörper bzw. Kühlelement vorgesehen sind. Als Abgabeoberfläche dient somit, wie oben beschrieben, ein äußerer Kühlflächenbereich eines Kühlelements oder eines Gehäuses, das in einem ersten Oberflächenbereich der Masse eingelassen ist oder mit diesem in direktem körperlichen Kontakt steht. Als Abgabeoberfläche dient ferner ein zweiter Oberflächenbereich der Masse selbst, der Wärme nach außen abgibt, ggf. durch Abstrahlung oder Konvektion an ein Gehäuse. Die Schaltung kann ferner beide Varianten umfassen, so dass die Kühlflächen zum einen vorgesehen werden von einem äußeren Kühlflächenbereich eines Kühlelements oder eines Gehäuses oder von einem zweiten Oberflächenbereich der Masse selbst.

Die Masse kann ferner einen Abstand zwischen den elektronischen Bauelementen und einem Kühlelement oder einem Oberflächenbereich der Masse Wärme leitend überbrücken. Ferner ist es möglich, dass die Kühlfläche bzw. Kühlflächen unmittelbar auf den Bauelementen angeordnet sind bzw. in unmittelbarem körperlichen Kontakt mit Wärmeabgabeflächen der Bauelemente stehen. Insbesondere können ein oder mehrere Kühlelemente oder (innere) Gehäuseabschnitte vorgesehen sein, die auf Kühlabgabeflächen der Bauelemente unmittelbar angeordnet sind, wobei in diesem Fall die Masse vor allem dazu dient, den mechanischen Kontakt zwischen Kühlelement und Bauelement vorzusehen. Die zur Wärmeleitung verwendeten Kühlelemente oder Gehäuseabschnitte sind zumindest teilweise in der Masse eingelassen oder auf andere Weise unmittelbar in körperlichem Kontakt mit diesen. Dadurch verringert sich das Risiko abfallender Kühlelemente. Je nach Ausgestaltung können die wärmeleitfähigen Eigenschaften der Masse in den Hintergrund treten, da der überwiegende Anteil oder im Wesentlichen der gesamte Anteil der im Bauteil entstehenden Wärme durch den unmittelbaren körperlichen Kontakt zum Kühlelement an das Kühlelement abgegeben wird, welches durch den unmittelbaren Kontakt zum Außenraum diese Wärme wiederum nach außen abgibt. Vorzugsweise dient die Masse (als Gußmasse oder als eingefügte optische Struktur) jedoch der Wärmeleitung zwischen daran unmittelbar anstoßenden Bauelementen und den Kühlkörpern oder den inneren Gehäuseabschnitten. Kühlkörper, Kühlelement und Gehäuse sind vorzugsweise aus einem Metall, einer Metalllegierung oder aus einem anderen wärmeleitenden Material ausgestaltet und weisen eine körperliche äußere Struktur auf, die den Wärmeaustausch mit der Umgebung begünstigt, beispielsweise Kühlfinger oder Wärmeabgabeflächen, die über Befestigungsmittel an der Umgebung (beispielsweise ein Chassis) wärmeleitend befestigt sind.

Durch die Wärmeleitfähigkeit der Masse wird ferner Wärme von einem Substrat abgeführt, auf dem die Bauelemente montiert sind. In diesem Fall ist die Schaltung substratbasiert und Bauelemente sind mittels Durchsteck- oder SMD-Technik auf dem Substrat montiert. Das Substrat selbst kann eine Leiterplatte sein, beispielsweise auf Hartpapier- oder Epoxybasis, oder kann ein Keramiksubstrat sein. Insbesondere bei der Verwendung von wärmeleitenden Materialien für das Substrat, beispielsweise bei der Verwendung von Keramiksubstrat, kann Wärme von dem Substrat durch die Masse abgeleitet werden, insbesondere wenn auf einer Rückseite des Substrats, an der sich gegebenenfalls keine Masse befindet, wärmeerzeugende Bauteile, insbesondere Leistungsbauteile montiert sind. Die Wärme wird dann von dem Bauteil durch das Substrat hindurch in die Masse und von dieser an den Außenraum geleitet, der die Masse umgibt, oder an ein Medium, mit dem die Masse gekühlt wird. Neben der Wärmeableitung gibt die Masse eine Temperaturangleichung zwischen den Bauelementen vor, die an die Masse angrenzen. Durch diese Wärmekopplung wird eine Temperaturkompensation vereinfacht.

Gemäß einer ersten Ausführungsform ist die Masse aus einem Stoff bzw. einem Gemisch, das sich durch Urformen, Umformen oder Trennen in die gewünschte Struktur bringen lässt, bevor die Struktur zwischen die Bauelemente eingebracht wird, beispielsweise durch Einstecken. Insbesondere können ein oder mehrere erfindungsgemäße Strukturen vor der Befestigung zwischen den Bauteilen mit gewünschter Form hergestellt werden (beispielsweise durch Giessen oder Spritzgießen). Die Struktur umfasst Ausnehmungen, um die Bauelemente beim Einfügen aufnehmen zu können, sowie mindestens eine Oberfläche, die in einer inneren (Seiten-)Fläche der Ausnehmung vorgesehen ist, und die eingerichtet ist, in unmittelbaren Kontakt zu einer optischen Datenschnittstelle eines Bauelements zu treten, wenn die Struktur zwischen die Bauelemente eingefügt ist bzw. wird. Vorzugsweise ist die Masse bzw. die Struktur zumindest geringfügig elastisch, um beim Einbringen zwischen die Bauelemente einen Presssitz mit den Datenschnittstellen vorzusehen.

Alternativ zu einer vorgefertigten Struktur wie oben beschrieben, kann die Masse durch Giessen zwischen die Bauelemente eingebracht werden. Die Zusammensetzung der Masse einer Alternative kann für die Masse der anderen Alternative verwendet werden, und umgekehrt.

Die Masse ist aus einem Stoff bzw. einem Gemisch, das sich vom flüssigen Zustand in den festen überführen lässt, beispielsweise durch eine chemische Vernetzungsreaktion (Polymerisation) oder durch Abkühlen. Die Masse umfasst insbesondere Silikon, eine Silikonmischung, Silikonkautschuk, Silikonelastomer, Kunststoffe, Thermoplaste, einen Schmelzklebstoff, ein Wachs oder eine Kombination hiervon. Vorzugsweise hat die Masse einen Schmelzpunkt oder eine Zersetzungstemperatur > 80 °C, > 100 °C, > 120 °C, > 150 °C oder > 180 °C. Darüber hinaus können der Masse Zusatzstoffe beigefügt sein, wie Emulgatoren, (räumlich beschränkt) Farbstoffe, lichtstreuende Partikel oder Ähnliches. Die Masse kann als homogenes Gemisch bzw. emulgiertes Gemisch vorgesehen sein, oder kann nur einen einzigen Stoff umfassen, beispielsweise eine bestimmte Silikonverbindung oder eine bestimmte Thermoplastverbindung. Darüber hinaus kann die Masse als Verbundmaterial ausgebildet sein, beispielsweise aus zwei oder mehr verbundenen Materialien, wobei eines der Materialien optisch transparent oder transluzent ist und gegebenenfalls andere Materialien insbesondere die Wärmeleitfähigkeit erhöhen. Zur Erhöhung der Wärmeleitung können beispielsweise Metallpartikel oder Keramiken vorgesehen sein, und zum Vorsehen der lichtdurchlässigen Eigenschaften der Masse können Partikel oder Fasern aus einem lichtdurchlässigen Material vorgesehen sein.

Erfindungsgemäß bedeutet die lichtdurchlässige Eigenschaft der Masse, dass diese transparent oder transluzent ist, so dass sowohl klare als auch diffuse Materialien verwendet werden können. Lichtdurchlässig bedeutet, dass der Dämpfungsfaktor für die zur Übermittlung verwendeten optischen Signale (d. h. Licht im sichtbaren Bereich, IR-Strahlung oder UV-Strahlung) kleiner ist als 20 dB, 15 dB, 12 dB, 9 dB, 6 dB, 3 dB oder kleiner als 1 dB jeweils bezogen auf 1 cm Wegstrecke. Bei der Verwendung von besonders klaren Massen können diese eine Dämpfung von weniger als 0,1 oder 0,01 dB/cm aufweisen. Alle vorgenannten Dämpfungswerte können auch die Untergrenze für die Dämpfung darstellen, wenn die Lichtdurchlässigkeit zugunsten der mechanischen Stabilität und/oder zugunsten der Wärmeleitung durch entsprechende Materialauswahl beschränkt wird. Hieraus ist ersichtlich, dass nicht nur Materialien verwendet werden können, die besonders für optische Übertragung über lange Wegstrecken (mehrere km) geeignet sind, wobei übliche Wegstrecken zur optischen Datenübertragung in der erfindungsgemäßen Schaltung in der Größenordnung von einigen Zentimetern oder wenigen Dezimetern sind, und insbesondere weniger als 20 cm, 10 cm, weniger als 5 cm, weniger als 2 cm oder weniger als 1 cm betragen, da durch die Miniaturisierung und hochgradige Integration der Bauelemente diese üblicherweise relativ nahe (Größenordnung von einigen Millimeter bis wenigen Zentimetern) beieinander angeordnet sind. Dadurch lassen sich eine Vielzahl von Materialien als lichtleitende Masse verwenden, beispielsweise ungefärbtes Dichtsilikon, das bereits in einer Vielzahl von Anwendungen verwendet wird für Abdichtungen, die für Gas oder für Flüssigkeit dicht sind.

Neben der lichtdurchlässigen Eigenschaft ist die Masse ferner elastisch, beispielsweise mit einem Elastizitätsmodul von > 0.001, > 0.005, > 0.01, > 0.02, > 0.05, > 0.1, 0.2 oder > 0.5 kN/mm². Vorzugsweise ist die Masse ferner elastisch und, im Vergleich zur Elastizität, im Wesentlichen nicht plastisch. Dies ermöglicht einen Pressitz zwischen Masse und Bauelement, insbesondere wenn die eingebaute Struktur vorgespannt ist.

Darüber hinaus ist die Masse ferner vorzugsweise elektrisch isolierend mit einer elektrischen Leitfähigkeit von < 10⁻³, < 10⁻⁵, < 10⁻⁶, < 10⁻⁸, < 10⁻¹⁰, < 10⁻¹², oder < 10⁻¹⁴ S/m. Bei der Verwendung von Materialien mit schlechten Isolationseigenschaften (elektrische Leitfähigkeit beispielsweise > 10⁻⁵ S/m) können Kontakte der elektronischen Bauelemente an ihrer Oberfläche einen Schutzlack aufweisen, der die Kontakte elektrisch gegenüber der Masse isoliert. Insbesondere bei der Verwendung von sehr gut Wärme leitenden Massen werden die elektronischen Bauelemente vorzugsweise mit einer derartigen Isolationsbeschichtung vorgesehen.

Erfindungsgemäß bietet die Masse ein Medium zur optischen Datenübertragung, wobei die gesamte Masse oder ein Unterbereich der Masse als physikalischer Kanal angesehen werden kann. Einzelne Bereiche der gesamten Masse können voneinander getrennt werden durch Einfügen einer optischen Trennwand in die Masse durch geeignete abschnittsweise Färbung oder durch Einbringen von lichtundurchlässigen Materialien in bestimmten Bereichen in einer Masse, beispielsweise durch Folien oder Bleche innerhalb der Masse. Diese optische Trennung kann insbesondere bei der Fertigung der Struktur vorgesehen werden, bevor die Struktur zwischen die Bauelemente und in das Gehäuse eingefügt wird.

Grundsätzlich können alle elektronischen Bauteile der Schaltung mit einer optischen Schnittstelle einer Zentral-Kommunikationssteuerung oder eines anderen zentralen Bauteils durch einen gemeinsamen optischen Kanal verbunden sein. Dieser optische Kanal wird als physikalischer Kanal durch die lichtdurchlässige Masse vorgesehen. Alternativ kann die Schaltung mindestens zwei verschiedene Untergruppen aller elektronischen Bauteile der Schaltung jeweils mit einer optischen Schnittstelle von mindestens zwei optischen Schnittstellen einer zentralen Kommunikationssteuerung über mindestens zwei getrennte optische Kanäle verbunden sein. Die optischen Kanäle lassen sich durch Ausrichtung oder durch Einführen eines lichtundurchlässigen Bereichs in der Masse vorsehen. Damit entsteht eine erste Untergruppe aller elektronischen Bauteile, die mit einer ersten optischen Schnittstelle einer Zentralsteuerung in Verbindung steht, und mindestens eine weitere Untergruppe aller Bauelemente der gleichen Schaltung, die mit einer zweiten, davon getrennten optischen Schnittstelle einer zentralen Kommunikationssteuerung in Verbindung steht. Die optischen Kanäle können durch unterschiedliche Sende-/Empfangsausrichtungen der mindestens zwei optischen Schnittstellen der zentralen Kommunikationssteuerung voneinander getrennt werden.

Ein einfaches Beispiel hierfür ist eine zentrale Kommunikationssteuerung, deren zwei optische Schnittstellen in zwei entgegengesetzte Richtungen ausgerichtet sind, beispielsweise durch Anordnung der Schnittstellen auf einer Vorder- und einer Rückseite der Kommunikationssteuerung. Dadurch ergeben sich zwei getrennte Kommunikationshemisphären auf Grund eines physikalisch getrennten Mediums. Darüber hinaus können die optischen Kanäle logisch getrennt werden, beispielsweise durch eine Token-Zugriffsteuerung oder durch eine Collision Detect (CD-) Zugriffssteuerung. Bei logischer Trennung können durch verschiedene logische Kanäle verbundene Bauelemente mit dem selben physikalischen Medium verbunden werden. Ferner kann das physikalische optische Medium in zwei getrennten Medien vorgesehen werden, in denen die optische Masse eine optisch blockierende Vorrichtung innerhalb der Masse aufweist. Zudem können die Kanäle über unterschiedliche Modulations- oder Trägerfrequenzen getrennt werden. Hierbei senden oder empfangen die optischen Schnittstellen der einzelnen elektronischen Bauteile auf unterschiedlichen Modulations- oder Trägerfrequenzen, wobei der zu Grunde liegende physikalische Kanal in Form der lichtdurchlässigen Masse alle Bauelemente miteinander verbindet. Einzelne Bauelemente können beispielsweise verschiedene Sende- oder Empfangsfarben aufweisen (Trennung mittels Trägerfrequenzen, beispielsweise durch Einsatz von Farbfiltern oder monochromatischen Lichtquellen wie LEDs) oder durch verschiedene Modulationsfrequenzen, mit denen die optischen Signale gesendet werden.

Das zu Grunde liegende Übertragungsverfahren sieht daher vor, mehrere optische Kanäle einzurichten und diese voneinander zu trennen durch: Übertragen der optischen Lichtsignale über unterschiedliche Trägerfrequenzen, um die Kanäle mittels Farben der übertragenen Lichtsignale zu trennen; Übertragen der optischen Lichtsignale über unterschiedliche Modulationsfrequenzen, um die Kanäle mittels Modulationsfrequenzfilterung der übertragenen Lichtsignale zu trennen; Übertragen der optischen Lichtsignale über unterschiedliche optische Pfade innerhalb der Masse, wobei die Pfade eine unterschiedliche räumliche Ausrichtung aufweisen, und die optischen Lichtsignale gerichtet abgestrahlt und/oder empfangen werden, um die Kanäle mittels Raummultiplex zu trennen; oder Zuordnen von Sendezeitfenstern zu den einzelnen Datenschnittstellen mittels einer Zentralsteuerung und Übermitteln von Transportsteuerbefehlen über einen optischen Steuerkanal durch die Zentralsteuerung oder Übertragen der optischen Lichtsignale nur dann, wenn gemäß einer Lichtsignalerfassung keine Daten über die Masse übertragen werden, um eine Kollision zu vermeiden oder um eine Datenübertragung zu wiederholen, wenn eine Kollision erfasst wurde.

Die Trennung der Kanäle wird somit vorgesehen durch Frequenzmultiplex (getrennte Modulationsfrequenzen oder Trägerfrequenzen, wobei die Trägerfrequenz der Lichtfarbe entspricht), durch Raummultiplex, indem den Übertragungskanälen verschiedene Winkelbereiche zugeteilt werden (im einfachsten Fall Richtungen, die sich um 180° unterscheiden) oder durch Zeitmultiplex. Im Falle des Zeitmultiplex kann eine Zentralsteuerung vorgesehen sein, die die Zeitschlitze den einzelnen Bauteilen zuordnet oder durch eine dezentrale Übertragung, bei der Kollisionen entdeckt werden und dezentral durch verzögerte Wiederholung im Kollisionsfall gelöst werden. Eine kollisionsbasierte Übertragung (collision detect, CD) kann ferner vorgesehen werden mit einem Arbiter, der im Kollisionsfall das Medium einem oder einer Untergruppe von Bauelementen zuteilt. Grundsätzlich können Sender- und Empfängergruppen auch durch Codemultiplex getrennt sein, wodurch sich eine Vielzahl logischer Kanäle ergibt.

Ferner kann die Übertragung unidirektional vorgesehen sein, beispielsweise von nur sendenden Sensoren und nur empfangenden nachgeschalteten Messeinrichtungen.

Die erfindungsgemäß verwendeten Lichtsignale können im Infrarotbereich oder im sichtbaren Bereich liegen. Grundsätzlich kann zur Trennung der lichtdurchlässigen Masse von der Umgebung die Schaltung in einem lichtundurchlässigen Gehäuse angeordnet sein, wobei alternativ oder in Kombination hierzu die Außenfläche der Masse vollständig oder zumindest teilweise mit einem lichtundurchlässigen Schutzlack oder einer anderen lichtundurchlässigen Schicht überzogen ist. Zur Wartung bzw. zum optischen Anschluss an die Masse kann die Oberfläche auch Fenster in der lichtundurchlässigen Schicht aufweisen, die beispielsweise durch einen lichtundurchlässigen Aufkleber geschlossen sind oder an denen ein externer Lichtleiter befestigt werden kann. Durch Anbringen eines externen Lichtwellenleiters kann das physikalische optische Medium, welches die Masse vorsieht, auf einfache Weise angezapft werden.

Die Erfindung umfasst ferner ein Verfahren zur Herstellung der erfindungsgemäßen Schaltung, wobei die mindestens zwei elektronischen Bauteile in einer festen Relativposition zueinander angeordnet werden. Insbesondere wenn die Schaltung ferner mindestens ein Substrat umfasst, auf dem die elektronischen Bauelemente befestigt sind, ergibt sich eine derartige feste räumliche Anordnung der Bauelemente durch den Bestückungsprozess. Daraufhin wird die Masse in festem, vorgefertigtem Zustand in Form einer Struktur oder auch in flüssigem oder fließfähigem Zustand in die Zwischenräume eingebracht, die zwischen den Bauelementen bestehen. Das Einbringen kann durch Einbringen, Einstecken, oder auch durch Befüllen, Gießen oder Spritzen der Masse erreicht werden. Hierbei sind die optischen Datenschnittstellen in unmittelbarem Kontakt mit der aus der Masse vorgesehenen Struktur bzw. mit Oberflächen der Struktur, oder sind vollständig in der Masse eingebettet, so dass optische Eingangs- oder Ausgangsöffnungen der Datenschnittstellen vollständig in optischem Kontakt mit der Masse und mit den Oberflächen der Struktur sind. Hierbei werden die Bauelemente entweder teilweise oder vollständig von der Masse umgeben (durch Einfügen der Bauelemente in Ausnehmungen der Struktur oder durch Eingießen mittels der Masse), so dass die Masse eine zusätzliche mechanische Fixierung erzeugt sowie eine effiziente Wärmeableitung durch die Masse auf Grund (unmittelbaren) körperlichen Kontakts.

Wenn zumindest ein Bauelement, einige Bauelemente oder alle Bauelemente im normalen Betrieb eine signifikante Wärmemenge erzeugen, beispielsweise im Falle von integrierten Schaltungen mit signifikanter Verlustwärme oder im Falle von Leistungsbauelementen mit Hochstromanwendungen, werden Wärmeleitkörper auf oder in die Nähe von Wärmeabgabeflächen dieser Bauelemente angeordnet, bevor die eingegossene Masse vollständig vernetzt oder verhärtet ist bzw. bevor die Masse in die Zwischenräume eingebracht wird. Hierzu können die Wärmeleitkörper an einer Halterung lösbar befestigt sein, so dass die Halterung zu den Bauelementen angeordnet wird, bevor (oder auch während) die Masse in die Zwischenräume eingebracht wird. Alternativ können die Wärmeleitkörper bereits an den Bauelementen oder an der Struktur befestigt sein, bevor die Struktur zwischen die Bauelemente eingefügt wird.

Wenn die Schaltung mit optischen Trennmitteln wie lichtundurchlässigen Schichten oder Folien innerhalb der Masse vorgesehen sein soll, um die Masse in getrennte physikalische Kanäle aufzuteilen, dann werden derartige lichtundurchlässige Körper entweder zusammen mit den Bauelementen oder auch zusammen mit den Kühlkörpern angeordnet, bevor oder während die Masse in die Zwischenräume eingebracht wird. Alternativ können die lichtundurchlässigen Körper auch getrennt von den Bauelementen und/oder den Kühlkörpern vor oder während des Einbringens der Masse relativ zu den Bauelementen angeordnet werden. Bei der Verwendung einer vorgefertigten optischen Struktur, die zwischen die Bauelemente eingelegt bzw. eingebracht wird, können diese optischen Trennmittel (lichtundurchlässige Körper) vor dem Einlegen oder nach dem Einlegen der Struktur zwischen die Bauelemente in die Struktur eingebracht werden, beispielsweise auch während der Herstellung der Struktur (beispielsweise Giessen) oder nach der Herstellung und vor dem Einlegen.

Das der Erfindung zu Grunde liegende Verfahren zur Übertragung von (optischen) Daten zwischen mindestens zwei optischen Datenschnittstellen mindestens zweier elektronischer Bauelemente umfasst somit das Vorsehen eines optischen Übertragungskanals mittels der lichtdurchlässigen Masse. Die mindestens zwei optischen Datenschnittstellen werden an den optischen Übertragungskanal durch Einbringen der Struktur zwischen die Datenschnittstellen oder durch Einbetten der optischen Datenschnittstellen in die optische Masse angeschlossen. Die Daten werden daraufhin in Form von optischen Lichtsignalen über den Kanal übertragen, indem Lichtsignale von der optischen Datenschnittstelle unmittelbar in die optische Masse hinein abgegeben werden, in die die optische Datenschnittstelle eingebettet ist, und/oder durch Empfangen der Lichtsignale durch eine weitere der optischen Datenschnittstellen unmittelbar von der optischen Masse, in die die weitere optische Datenschnittstelle eingelegt oder eingebettet ist. Besteht die Datenschnittstelle nicht nur aus einem Lichtsender- bzw. - empfängerelement, sondern auch aus zugehöriger Optik wie Gehäuse, Linsen und/oder Fenstern, so werden derartige Elemente zur Datenschnittstelle hinzugezählt. Grenzt somit die optisch transparente Masse unmittelbar an ein Fenster einer optischen Datenschnittstelle an, so wird dadurch die erfindungsgemäße unmittelbare Verbindung zwischen Datenschnittstelle und optischer Masse vorgesehen.

Das erfindungsgemäße Verfahren umfasst ferner das Vorsehen mehrerer optischer Kanäle, die von der lichtdurchlässigen Masse (bzw. von der Struktur, die von der Masse dargestellt wird) vorgesehen werden, wobei die optischen Kanäle durch die oben genannten Multiplexverfahren getrennt werden können. Das Übertragen von optischen Kanälen basiert somit auf einem Trennen der mehreren optischen Kanäle durch: Übertragen der optischen Lichtsignale über unterschiedliche Trägerfrequenzen, um die Kanäle mittels Farben der übertragenen Lichtsignale zu trennen; Übertragen der optischen Lichtsignale über unterschiedliche Modulationsfrequenzen, um die Kanäle mittels Modulationsfrequenzfilterung der übertragenen Lichtsignale zu trennen; Übertragen der optischen Lichtsignale über unterschiedliche optische Pfade innerhalb der Masse, wobei die Pfade eine unterschiedliche räumliche Ausrichtung aufweisen, und die optischen Lichtsignale gerichtet abgestrahlt und/oder empfangen werden, um die Kanäle mittels Raummultiplex zu trennen; oder Zuordnen von Sendezeitfenstern zu den einzelnen Datenschnittstellen mittels einer Zentralsteuerung und Übermitteln von Transportsteuerbefehlen über einen optischen Steuerkanal durch die Zentralsteuerung oder Übertragen der optischen Lichtsignale nur dann, wenn gemäß einer Lichtsignalerfassung keine Daten über die Masse übertragen werden, um eine Kollision zu vermeiden oder um eine Datenübertragung zu wiederholen, wenn eine Kollision erfasst wurde.

Grundsätzlich kann zur Trennung der Kanäle auch ein Codemultiplexverfahren verwendet werden, wobei eine erste Datenschnittstelle Daten überträgt, die mit einem ersten Code gefaltet sind, und eine weitere Datenschnittstelle Daten überträgt, die mit einem zweiten, dazu verschiedenen bzw. orthogonalen Code gefaltet sind.

Das erfindungsgemäße Verfahren umfasst gemäß einer Ausführung der Erfindung ferner das Ableiten von Wärme, die in den als Leistungsbauelemente oder als integrierte Schaltungen mit substantieller Verlustleistung ausgeführten elektronischen Bauelementen entsteht, wobei die Wärme durch unmittelbaren körperlichen Kontakt zwischen wärmeerzeugendes Bauelement und Masse in die Masse bzw. in die Struktur abgegeben wird. Ferner wird die Masse über mindestens ein Kühlelement oder einen Wärmeleitkörper oder einen Gehäuseabschnitt abgeleitet, der teilweise in der lichtdurchlässigen Masse eingebettet ist oder mit der Struktur in unmittelbarem körperlichen Kontakt steht, um die Wärme durch direkte Wärmeankoppelung der wärmeerzeugenden Bauelemente an die Masse nach außen abzuleiten. Alternativ oder in Kombination hierzu wird die Wärme über einen Oberflächenbereich der Masse abgeleitet, um die Wärme durch direkte Wärmeankoppelung der wärmeerzeugenden Bauelemente an die Masse über einen weiteren Oberflächenbereich der Masse nach außen abzuleiten.

Die Begriffe Kühlelement und Wärmeleitkörper stehen beide für das gleiche Wärmeübertragungselement, das unmittelbar an eine Wärmeabgabeoberfläche eines Bauelements angekoppelt ist, oder über einen Bereich der Masse mit dem elektronischen Bauelement verbunden ist. Das Kühlelement und der Wärmeleitkörper dienen zunächst zur Aufnahme der Wärme aus dem elektronischen Bauelement. Zusätzliche externe Kühlkörper wie Gehäuseabschnitte, Fingerkühlkörper oder Kühlrippen können an einen Oberflächenbereich der Masse oder insbesondere an das Kühlelement oder an den Wärmeleitkörper angebracht werden, vorzugsweise an einer Außenseite der Masse, in der das Kühlelement oder der Wärmeleitkörper eingebettet ist. Im Gegensatz zum externen Kühlkörper sind Kühlelement und Wärmeleitkörper größtenteils oder vollständig in der Masse eingelassen. Gehäuseabschnitte können ebenso unmittelbar an den Wärmeabgabeflächen der Bauelemente angeordnet sein, können als externe Kühlkörper an Kühlelement oder Wärmeleitkörper angeordnet sein, oder beides. Externe Kühlkörper können an die Bauelemente über ein Kühlelement oder über einen Wärmeleitkörper angekoppelt sein, oder aber auch durch einen Oberflächenbereich der Masse, der mit dem Bauelement Wärme übertragend in Verbindung steht.

Die erfindungsgemäße Schaltung und die erfindungsgemäßen Verfahren (Herstellungsverfahren und Datenübertragungsverfahren) können verwendet werden für Steuergeräte, insbesondere für die Motorsteuerung, Airbagsteuerung, ESP-Steuerung; Unterhaltungselektronik, Elektrowerkzeuge, Haushaltsgeräte oder andere Produkte.

Neben der beschriebenen optischen Datenübertragung kann das erfinderische Verfahren und die erfinderische Vorrichtung auch für eine übliche Übertragung mittels elektrischer Leitungen oder Datenbusse vorgesehen werden basierend auf Leiterbahnen einer Leiterplatte, oder aber durch Kabelverbindungen außerhalb des Substrats. Die erfindungsgemäße Schaltung kann ferner eine elektrische Schnittstelle umfassen, die ebenso teilweise in die Masse eingelassen ist, um eine (zusätzliche) mechanische Verbindung vorzusehen.

Grundsätzlich dann die Masse bzw. die dadurch vorgesehene Struktur alle Bauelemente, einige Bauelemente aller Bauelemente der Schaltung oder einzelne Bauelemente (beispielsweise 2) aller Bauelemente der Schaltung miteinander optisch verbinden. Neben dieser optischen Verbindung sieht die Masse bzw. die Struktur eine wärmeübertragende Verbindung vor, die zwischen Bauelementen besteht, dies insbesondere zwischen mindestens einem Bauelement und einem (internen) Wärmeleitkörper und/oder einem (externen) Kühlelement. Wärmeleitkörper und/oder Kühlelement können durch einen Gehäuseabschnitt eines Schaltungsgehäuses vorgesehen sein.

### Kurze Beschreibung der Zeichnungen

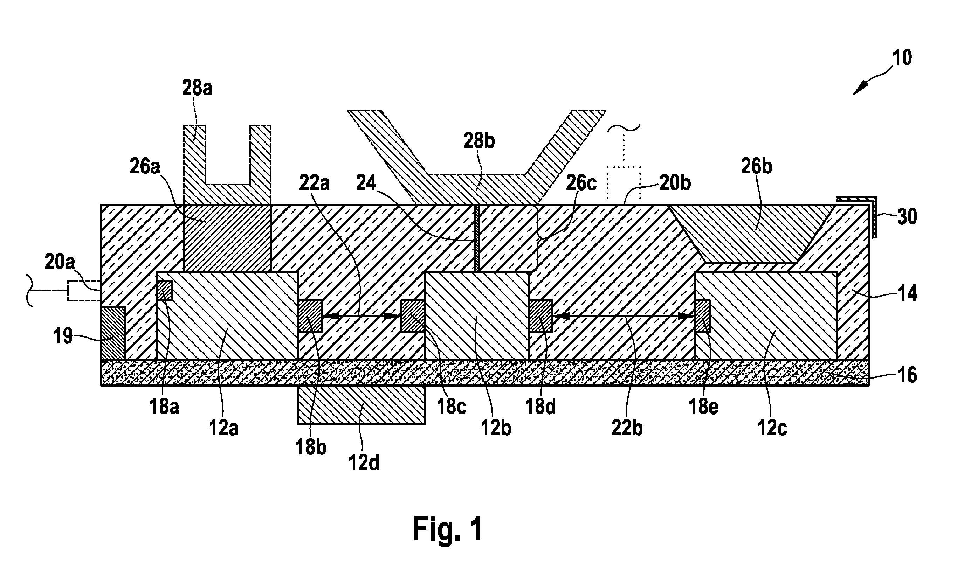

Die Figur 1 zeigt einen Querschnitt einer erfindungsgemäßen Schaltung zur Erläuterung des erfindungsgemäßen Datenübertragungsverfahrens und Herstellungsverfahrens.

### Detaillierte Beschreibung der Zeichnungen

Figur 1 zeigt einen Querschnitt einer erfindungsgemäßen Schaltung 10 mit elektronischen Bauelementen 12a, b, c, die innerhalb der optischen Masse 14 angeordnet sind sowie ein Bauteil 12d, das nicht innerhalb der Masse angeordnet ist. Die Bauteile 12a-d sind auf einem Substrat 16 befestigt (beispielsweise einem Keramiksubstrat oder einer Leiterplatte) und mit diesem elektrisch verbunden. Das Substrat 16 verbindet somit auch die Bauelemente 12a-d untereinander. Die Bauelemente 12a-c sind innerhalb der Masse und auf einer Oberseite des Substrats 16 angeordnet, wohingegen das Bauelement 12 d auf einer entgegengesetzten Unterseite des Substrats 16 angeordnet ist, und nicht in die Masse 14 eingebettet ist. Das Bauelement 12a weist eine erste Datenschnittstelle 18a und eine zweite Datenschnittstelle 18 b auf, das Bauteil 12 b weist eine erste Datenschnittstelle 18c und eine zweite Datenschnittstelle 18d auf, und das Bauteil 12c weist eine Datenschnittstelle 18e auf. Die Datenschnittstellen 18a-e sind optische Datenschnittstellen. Diese können in dem Bauteil eingelassen sein (Schnittstellen 18a, e) oder können auf dem Bauteil 18b, c, d angeordnet sein. Auf der Oberseite des Substrats 16 befindet sich ferner eine elektrische Schnittstelle 19, die mit dem Substrat 16 elektrisch verbunden ist. Weiterhin weist die Masse 14 optische Schnittstellen in Form von Oberflächenabschnitten 20a, b auf, mit denen sich die lichtdurchlässige Masse bzw. die dadurch vorgesehene Struktur anzapfen lässt. Die Oberflächenabschnitte dienen daher ebenso als optische Datenschnittstelle bzw. als Anschluss hierfür. Beispielsweise die optische Datenschnittstelle 18 a ist optisch mit der Anzapfung 20a verbunden, um beispielsweise Daten von dieser zu empfangen (über einen externen Lichtwellenleiter, gestrichelt dargestellt) oder an diese zu senden. Die Schnittstelle 18b des Bauteils 12a ist zur Schnittstelle 18c des Bauteils 12b ausgerichtet, um einen ersten optischen Kanal 22a vorzusehen. Der Kanal 22a dient der Datenverbindung zwischen den Bauelementen 12a und 12b. Die zweite Datenschnittstelle 18d des Bauelements 12b ist zur Datenschnittstelle 18e des Bauteils 12c ausgerichtet, um eine weitere Datenverbindung 22b vorzusehen. Es ist ersichtlich, dass die Kanäle 22a und 22b alleine durch die Ausrichtung der zugehörigen Datenschnittstellen voneinander getrennt sind. Der physikalische Kanal, der von der Masse 14 vorgesehen wird, lässt sich neben der Ausrichtung auch durch eine zusätzliche optische Blockierung 24 erreichen, die zwei Abschnitte der Masse 14 optisch voneinander trennt. Die Blockierung 24 kann vorgesehen werden durch Einfärben des dargestellten Bereichs der Masse oder durch Einlassen einer lichtundurchlässigen Schicht bzw. durch Eingießen dieser Schicht oder einer entsprechenden Folie während der Herstellung der Schaltung oder während der Herstellung der optischen Struktur vor Einbringen der Struktur zwischen die Bauelemente. Die Anzapfung 20b kann verwendet werden, um den Steuerinformation- oder Datenverkehr über die Verbindung 22b anzuzapfen oder auch, um Steuerbefehle oder Daten in die Kommunikation über Verbindung 22 b einzubringen (oder um Daten abzufragen). Es ist ersichtlich, dass ein von Schnittstelle 18d oder 18e ausgesandtes Signal die Anzapfung 20b erreicht und dass ein Lichtsignal ausgehend von der Anzapfung 20b die Schnittstellen 18d und 18e erreicht, wenn die Masse auch nur geringfügig die Lichtsignale streut. Insbesondere bei diffusen oder leicht diffusen Massen wird trotz mangelnder Ausrichtung ein ausreichender optischer Kanal vorgesehen. Hierzu wird nicht vollständig transparentes Material für die Masse verwendet, sondern ein zumindest leicht diffuses Material. Zur Unterstützung können daher lichtbrechende Partikel in der Masse verteilt sein.

Die Bauteile 12a-c weisen jeweils Wärmeabgabeflächen auf der Seite auf, die dem Substrat abgewandt ist. Zur Wärmeübertragung an die Oberfläche der Masse 14 ist daher ein Kühlelement oder ein Wärmeleitkörper 26a auf dem Bauelement 12a vorgesehen, wobei der Körper 26a in unmittelbarem Kontakt mit der Wärme abgebenden Fläche des Bauelements 12a steht. Das Kühlelement bzw. der wärmeleitende Körper 26b ist über einen (schmalen) Bereich der Masse mit der Wärmeabgabefläche des Bauelements 12c Wärme übertragend verbunden. Die Wärmeabgabefläche an der Oberseite des Bauelements 12b ist mit der Oberfläche der Masse 14 über einen Massenabschnitt 26c verbunden, der auf Grund der Wärmeleitfähigkeit der Masse 14 das Bauelement 12b mit der Außenfläche der Masse Wärme übertragend koppelt. Der wärmeleitende Körper 26b kann insbesondere ein Gehäuseabschnitt eines nicht dargestellten Gehäuses sein, das die Schaltung zumindest teilweise umgibt. Alternativ kann ein (nicht dargestellter) Gehäuseabschnitt auf der Außenfläche des Körpers 26b angeordnet sein und mit diesem in wärmeübertragendem Kontakt stehen, beispielsweise durch unmittelbaren körperlichen Kontakt.

Um die Wärmeabgabe an den Außenraum zu verbessern, können externe Kühlkörper 28a, b vorgesehen sein, die unmittelbar (oder über einen weiteren nicht dargestellten Massenbereich) mit dem Kühlelement bzw. dem Wärmeleitkörper 26a verbunden sind. Der externe Kühlkörper 28b ist über den Massebereich 26c mit der Wärmeabgabefläche des Bauelements 12b verbunden, wohingegen der externe Kühlkörper 28a unmittelbar und nur über den Wärmeleitkörper 26a mit der Wärmeabgabefläche des Bauelements 12a verbunden ist. Die Wärmeabgabefläche des Bauelements 12c leitet über einen schmalen Massebereich die Wärme an das Kühlelement 26b, welches in der Masse eingelassen ist und dessen Außenfläche nicht von Masse bedeckt ist. Die Außenfläche des Kühlelements 26b sieht somit entweder die Möglichkeit der Ankoppelung von externen Kühlkörpern vor oder die Möglichkeit, unmittelbar Wärme über seine Außenfläche and die Umgebung abzugeben. Das Kühlelement kann ein Fingerkühlkörper sein oder kann, gemäß einer nicht dargestellten Alternative, ein Gehäuseabschnitt eines nicht dargestellten Gehäuses sein, das die Schaltung zumindest teilweise umgibt. Der Gehäuseabschnitt gibt die aufgenommene Wärme an das Gehäuse weiter, welches die Wärme wiederum an die Umgebung abgibt.

Zur optischen Trennung der Masse 14 ist diese mit einer lichtundurchlässigen Schicht 30 bedeckt. In Figur 1 ist die Schicht 30 nur für einen sehr kleinen Oberflächenbereich der Masse dargestellt, um die Darstellung zu verbessern. In einer tatsächlichen Umsetzung befindet sich die Schicht 30 an sämtlichen Außenflächenabschnitten der Masse (bis auf die Fläche, welche durch das Substrat 16 abgedeckt ist), wobei Ausnehmungen, beispielsweise an den Außenseiten der Kühlelemente bzw. Wärmeleitkörper 26a, 26b vorgesehen sind und beispielsweise abdeckbare Ausnehmungen an den Anzapfungen 20a, b vorgesehen sind.

Die Masse 14 überträgt ferner Wärme von dem Substrat 16 an die Außenfläche der Masse. Die in Bauteil 12 d entstehende Wärme wird durch das Substrat 16 hindurch in die Masse 14 übertragen, und von dort zu einer Außenfläche des Substrats 16, insbesondere an die Abschnitte der Außenfläche, an denen sich die externen Kühlkörper 28 a, b befinden. Somit dient die Masse auch zur Kühlung des Substrats 16 bzw. von Bauelementen, die nicht in der Masse 14 eingebettet sind. Ferner ist aus Figur 1 ersichtlich, dass die Masse 14 alle darin einbetteten Bauelemente 12 a-c sowie auch auf der Unterseite des Substrats vorgesehene Bauelemente (in Figur 1: Bezugszeichen 12d) miteinander thermisch koppelt.

## Patentansprüche

1. Schaltung mit mindestens zwei elektronischen Bauelementen, wobei die mindestens zwei elektronischen Bauelemente jeweils mindestens eine optische Datenschnittstelle aufweisen, **dadurch gekennzeichnet, dass** die Schaltung ferner eine Masse umfasst, die lichtdurchlässig ist, und in die die optischen Datenschnittstellen sowie die elektronischen Bauelemente eingelassen sind, wobei die optischen Datenschnittstellen zur Masse derart ausgerichtet sind, dass optische Signale, die durch die Masse übertragen werden, zu und ausgehend von den optischen Datenschnittstellen übertragen werden.

2. Schaltung nach Anspruch 1, wobei die mindestens zwei elektronischen Bauelemente wärmeabgebende Bauelemente sind, die Masse ferner wärmeleitfähig ist, und die Schaltung ferner Kühlflächen umfasst, die
(i) von einem äußeren Kühlflächenbereich eines Kühlelements, das in einem ersten Oberflächenbereich der Masse eingelassenen ist oder mit diesem in körperlichem Kontakt steht,
(ii) von einem zweiten Oberflächenbereich der Masse,
(iii) von dem äußeren Kühlflächenbereich und von dem zweiten Oberflächenbereich oder
(iv) von einem Gehäuseabschnitt eines die Schaltung zumindest teilweise umgebenden Gehäuses gebildet werden.

3. Schaltung nach Anspruch 1 oder 2, wobei die Masse ferner aus elektrisch isolierendem und/oder aus elastischem Material ausgebildet ist, wobei die Masse insbesondere Silikon, eine Silikonmischung, Silikonkautschuk, Silikonelastomer, ein Thermoplast, ein Schmelzklebstoff, ein Wachs oder eine Kombination hiervon umfasst.

4. Schaltung nach einem der vorangehenden Ansprüche, wobei die Masse als Verbundmaterial ausgebildet ist und wärmeleitende Füllstoffe und/oder weitere Zusatzstoffe umfasst.

5. Schaltung nach einem der vorangehenden Ansprüche, wobei:
(i) alle optisch kommunizierenden elektronischen Bauteile der Schaltung mit einer optischen Schnittsstelle einer Zentral-Kommunikationssteuerung oder eines anderen zentralen Bauteils durch einen gemeinsamen optischen Kanal verbunden sind, der von der Masse vorgesehen wird;
(ii) elektronische Bauteile der Schaltung innerhalb verschiedener Untergruppen der Bauteile über ihre optischen Schnittsstellen untereinander durch optische Kanäle verbunden sind, wobei sich Kanäle unterschiedlicher Untergruppen unterscheiden, und die Kanäle von der Masse vorgesehen werden, und die optischen Kanäle verschiedener Untergruppen durch unterschiedliche Sende-/Empfangsausrichtungen der mindestens zwei optischen Schnittstellen der zentralen Kommunikationseinheit getrennt sind oder durch eine optische Blockierungsvorrichtung innerhalb der Masse getrennt sind; oder
(iii) die optischen Schnittstellen der einzelnen elektronischen Bauteile auf unterschiedlichen Modulations- oder Trägerfrequenzen senden oder empfangen, und die Masse alle elektronischen Bauteile der Schaltung miteinander verbindet.

6. Verfahren zur Herstellung einer Schaltung nach einem der vorangehenden Ansprüche, umfassend:
Anordnen der mindestens zwei elektronischen Bauelemente in einer festen Relativposition zueinander;
Einbringen der Masse in Zwischenräume, die zwischen den Bauelementen bestehen, durch Einstecken oder Einbringen einer festen Struktur, die von der Masse gebildet wird oder Befüllen, Giessen oder Spritzen der als fließfähige Masse vorgesehenen Masse in die Zwischenräume, wobei optische Eingangs- oder Ausgangsöffnungen der optischen Datenschnittstellen vollständig in der Masse eingebettet werden oder diese in unmittelbarem Kontakt mit der Masse treten und die Bauelemente teilweise oder vollständig von der Masse umgeben sind.

7. Verfahren nach Anspruch 6, wobei ferner die Bauelemente wärmeerzeugende Bauelemente sind, und das Verfahren ferner umfasst: Anordnen eines Wärmeleitkörpers auf oder in der Nähe von Wärmeabgabeflächen der wärmeerzeugende Bauelemente, bevor die als fließfähige Masse vorgesehene Masse vollständig vernetzt oder sich verhärtet oder bevor die Masse als feste Struktur in den Zwischenräumen angeordnet wird.

8. Verfahren zur Übertragung von Daten zwischen mindestens zwei optischen Datenschnittstellen mindestens zweier elektronischer Bauelemente, umfassend: Vorsehen eines optischen Übertragungskanals mittels der lichtdurchlässigen Masse; Anschließen der mindestens zwei optischen Datenschnittstellen an den Kanal durch Einbetten der optischen Datenschnittstellen in die lichtdurchlässige Masse oder durch Anordnen der als feste Struktur vorgesehenen Masse zwischen die optischen Datenschnittstellen; und Übertragen von Daten in Form von optischen Lichtsignalen über den Kanal durch Abgeben der Lichtsignale von der optischen Datenschnittstelle unmittelbar in die optische Masse hinein, in die die optische Datenschnittstelle eingebettet ist, und Empfangen der Lichtsignale durch eine weitere der optischen Datenschnittstellen unmittelbar von der optischen Masse, in die die weitere optische Datenschnittstelle eingebettet ist oder mit der diese in körperlichem Kontakt sind.

9. Verfahren nach Anspruch 8, ferner umfassend: Vorsehen von mehreren optischen Kanälen, die von der lichtdurchlässigen Masse vorgesehen werden; und Trennen der mehreren optischen Kanäle durch:
(i) Übertragen der optischen Lichtsignale über unterschiedliche Trägerfrequenzen, um die Kanäle mittels Farben der übertragenen Lichtsignale zu trennen;
(ii) Übertragen der optischen Lichtsignale über unterschiedliche Modulationsfrequenzen, um die Kanäle mittels Modulationsfrequenzfilterung der übertragenen Lichtsignale zu trennen;
(iii) Übertragen der optischen Lichtsignale über unterschiedliche optische Pfade innerhalb der Masse, wobei die Pfade eine unterschiedliche räumliche Ausrichtung aufweisen, und die optischen Lichtsignale gerichtet abgestrahlt und/oder empfangen werden, um die Kanäle mittels Raummultiplex zu trennen; oder
(iv) Zuordnen von Sendezeitfenstern zu den einzelnen Datenschnittstellen mittels einer Zentralsteuerung und Übermitteln von Transportsteuerbefehlen über einen optischen Steuerkanal durch die Zentralsteuerung oder Übertragen der optischen Lichtsignale nur dann, wenn gemäß einer Lichtsignalerfassung keine Daten über die Masse übertragen werden, um eine Kollision zu vermeiden oder um eine Datenübertragung zu wiederholen, wenn eine Kollision erfasst wurde.

10. Verfahren nach Anspruch 8 oder 9, wobei das Verfahren neben dem Übertragen von Daten umfasst: Ableiten von Wärme, die in den als wärmeabgebende Bauelemente ausgeführten elektronischen Bauelementen entsteht, wobei die Wärme über mindestens ein Kühlelement oder über einen Wärmeleitkörper oder über einen Gehäuseabschnitt abgeleitet wird, der teilweise in der lichtdurchlässigen Masse eingebettet ist oder an dieser angrenzt, um die Wärme durch direkte Wärmeankopplung der Leistungsbauelemente an die Masse nach außen abzuleiten, oder wobei die Wärme über einen Oberflächenbereich der Masse abgeleitet wird, um die Wärme durch direkte Wärmeankopplung der wärmeabgebenden Bauelemente an die Masse über einen weiteren Oberflächenbereich der Masse nach außen abzuleiten.
